# EUROPEAN PATENT SPECIFICATION

(11) **EP 1 448 381 B1**
(45) Date of publication and mention of the grant of the patent: **09.08.2006**
(21) Application number: 02801344.9
(22) Date of filing: 15.10.2002
(51) Int. Cl.: B32B 27/10, B65D 77/20

(54) **PACKAGE LID, METHOD FOR MANUFACTURING THE SAME AND PACKAGE SEALED WITH THE LID**
VERPACKUNGSDECKEL, HERSTELLUNGSVERFAHREN DAFÜR UND MIT DEM DECKEL VERSCHLOSSENE VERPACKUNG
COUVERCLE D'EMBALLAGE, SON PROCEDE DE PRODUCTION ET EMBALLAGE FERME HERMETIQUEMENT AU MOYEN D'UN TEL COUVERCLE

(30) Priority: 15.10.2001 FI 20012000
(43) Date of publication of application: 25.08.2004
(73) Proprietor: Stora Enso Oyj, 00160 Helsinki (FI)
(72) Inventor: PENTTINEN, Tapani, FIN-49210 Huutjärvi (FI); SALMINEN, Risto, FIN-48600 Karhula (FI)
(74) Representative: Saijonmaa, Olli-Pekka
(86) International application number: PCT/FI2002/000805
(87) International publication number: WO 2003/033258

(56) References cited:
- EP-A2- 0 687 557
- WO-A1-00/21854
- WO-A1-92/04187
- US-B1- 6 264 098

## Description

This invention relates to a lid that can be heat-sealed to the opening of a package and peeled off when the package is opened, comprising a fibrous material, layer a polymer oxygen-barrier layer, and a polymer heat-seal layer. Moreover, the invention relates to a method for manufacturing the lid, a method for manufacturing a package closed with the lid and the sealed package thus obtained.

Heat-sealed peelable lids are used in different consumer packages. Typical packages are consumer and single-use packages containing liquid, humid or fat foodstuffs. Packaged products include milk, sour milk, yoghurt and other diary products, juices, water, desserts, nutrient fats, such a butter and margarine, and ready-made food. Dry, powderous or particulate products such as medicines are similarly packaged.

A package container or vessel sealed with a heat-sealed lid is most frequently made of plastic, such as polypropylene or polystyrene, polymer-coated cardboard or glass, for instance. The lid material is aluminium, which, however, involves the problem of having a tendency to tear as the package is opened, and what is more, is not decomposable at waste dumps. Polymer-coated paper or cardboard has been used as an optional lid material eliminating these problems. The polymer layers in the lid have provided adequate mechanical strength, the oxygen and aroma seal required for the product and facilities for heat-sealing the lid as the package is closed and for peeling it off as the package is eventually opened.

Polymer-coated package lids have been manufactured by first producing a polyethylene terephthalate film laminated with hot-seal varnish, and then attaching it to paper or cardboard by gluing. However, it is awkward to use such a two-step process yielding said polymer film as an intermediate product.

WO patent specification 92/04187 describes a process for manufacturing a heat-sealed and peelable package lid by applying the polymer layers forming the polymer coating on top of one another onto the paper in one single co-extrusion step. The coating consists of a binder layer, an oxygen-barrier layer, a second binder layer and a heat seal layer, the layers being placed in this order on the bottom side of the paper, which ultimately will form the inner surface of the lid. The specification mentions as materials of the oxygen-barrier layer polyethylene terephthalate (PET), ethylene vinyl alcohol polymer (EVOH) and polyamide (PA). The heat-seal layer is defined as a mixture containing polyethylene modified with metacrylic acid and ethylene vinyl acetate acting as an adhering component and ethylene metacrylic acid copolymer acting as a detaching component. FI patent specification 104 887 further describes a polymer-coated package lid, in which the warping problem entailed by the lid of WO patent specification 92/04187 is solved by admixing crystalline and amorphous polymer in the oxygen-barrier layer. The inner paper surface of the three-layered coating described in the reference comprises an oxygen-barrier layer, a binder layer and a heat-seal layer, in this order.

The purpose of this invention is to provide a package lid made of polymer-coated paper or cardboard which can be heat-sealed and peeled off, which can be manufactured by co-extruding the polymer layers in one single step and which allows reduction of the number of polymer layers on top of each other. The invention is characterised by the heat-seal layer containing a mixture of ethylene methyl acrylate copolymer (EMA), ethylene vinyl acetate copolymer (EVA) and polyamide wax, and in the heat-seal layer being adhered directly to the oxygen-barrier layer having a higher melting point, without any intermediate binder.

In accordance with the invention, it has now surprisingly been found that said polymer material in the heat-seal layer can be adhered as such by co-extrusion to the most frequently used oxygen-barrier polymers, i.e. polyethylene terephthalate, ethylene vinyl alcohol copolymer or polyamide, despite the large difference between the melting points of the polymers. Consequently, it will not be necessary to use any prior art polymer binder layer between the oxygen-banier layer and the heat-seal layer.

The mixture of EMA, EVA and polyamide wax in accordance with the invention has been stated to provide good heat-sealing to materials of various types, such as plastic, polymer-coated or uncoated paper or cardboard and also glass.

A particularly preferred embodiment of the invention comprises a permanent seal of a cardboard freeze box, mould or drinking cup coated with PET by means of a heat-seal lid, such a seal having been problematic using prior art heat-seal materials.

Heat sealing can be performed at temperatures at which the oxygen-barrier layer remains intact with no leakage occurring through the heat seal, which would risk deteriorating the conservation of the product. The sealed package has been noted to withstand freezing without the lid coming off or leakage of the heat seal.

Without restricting the invention, the EMA obviously has the function in the heat-seal mixture of allowing the lid to be peeled off. EVA achieves adherence of the heat-seal layer to the oxygen-barrier layer and adherence of the seal to the counter-surface of the lid, from which the lid can be detached. Experiments have shown that, if EMA and also EVA are excluded, the lid becomes inoperative, in other words, the presence of both EMA and EVA is indispensable. Polyamide wax is necessary for workability of the mixture, the wax accounting for 0.8% of the mixture according to tests. If a smaller amount is used, the mixture adheres to tools and prevents materials with which it is coated from rolling. Polyamide wax also contributes to the ease of peeling off the lid. Polyolefin is added to the blend as a less expensive filler. In accordance with the invention, the proportion of polyamide wax in the polymer blend of the polymer-seal layer may be in the range from 0.8 to 5%, the proportion of EVA in the range from 20 to 50%, and the proportion of EMA in the range from 10 to 30%. The remainder of the blend may consist of polyolefin, such as polyethylene or polypropylene.

The polymer coating on the lid of the invention may preferably consist merely of a double-layer coating comprising said oxygen-barrier and heat-seal layers. However, whenever necessary, the oxygen-barrier may consist of more layers, which are different barrier polymers, such as EVOH and PA layers adhered to each other.

With PET or PA as the material of the oxygen-barrier layer, its layer weight may vary in the range of 10 to 70 g/m², most preferably in the range from 20 to 40 g/m². With EVOH as the packaging material, the layer weight may be in the range from 5 to 25 g/m², most preferably 10 to 20 g/m². The heat-seal layer, in turn, may have a weight in the range from 5 to 30 g/m², most preferably 10 to 20 g/m².

In accordance with the invention, the fibrous material layer may consist of paper, having a weight from 30 to 120 g/m², preferably 40 to 80 g/m², or cardboard, having a weight of 130 to 600 g/m², preferably 220 to 300 g/m². A paper-based lid is suitable for sealing a relatively small cup or goblet, whereas a cardboard-based lid is suitable especially as the inner lid of a box-like package.

The method according to the invention for manufacturing the above-described lid that can be heat-sealed and peeled off is characterised by coating the fibrous material by coextrusion in one single step with two polymer layers adhering to the fibres and to each other, one of said layers forming the oxygen-barrier layer and the other forming the heat-seal layer allowing peeling off of the lid, the latter containing a blend of EMA and EVA and polyamide wax. The polymer layers can be extruded as continuous films on a fibrous material web, and separate lids are subsequently formed by cutting or punching the web.

The method in accordance with the invention for manufacturing a sealed package comprises substantially heat-sealing of a lid at the opening of the package, the lid comprising a fibrous material layer, a polymer oxygen-barrier layer and a heat-seal layer adhered directly to the oxygen-barrier layer without intermediate binder, the heat-seal layer containing EMA and EVA and also polyamide wax and enabling the lid to be peeled off as the package is opened. The heat-sealing temperature may vary within the range of 150 to 190 °C. At these temperatures, heat-sealing does not cause holes in the oxygen-barrier layer made of PET, EVOH or PA and having melting points above 160 °C.

The sealed package of the invention is characterised by comprising a container, a package product contained in the container, and a lid heat-sealed to the opening of the container, the lid being made up of a fibrous material layer, a subjacent polymer oxygen-barrier layer and a heat-seal layer forming the inner surface of the lid and adhered directly to the oxygen-barrier layer without any intermediate binder, the heat-seal layer containing a blend of EMA and EVA and also polyamide wax allowing the lid to be peeled off as the package is opened. In food packages of the invention, such as packages for drinks, diary products, nutrient fats or ready-made foods, the container is typically a box or goblet made of plastic or cardboard coated with polymer on the inside and/or outside. In box-like packages, and also in packages having a package container made of glass, the heat-sealed lid is typically a peelable inner lid inside the outer cover fixed by screwing or snap attachment.

The invention is explained more in detail below with reference first to the accompanying drawing, in which
figure 1 shows a drinking cup with a lid in accordance with the invention,
figure 2 illustrates the opening of the cup of the figure in cross-section on a larger scale, showing the heat-seal joint between the opening and the lid,
figres 3 and 4 show the layer structures of the lid in two different material combinations, and
figure 5 shows co-extrusion and adherence of the polymer layers to the fibrous material web in the lid manufacturing process.

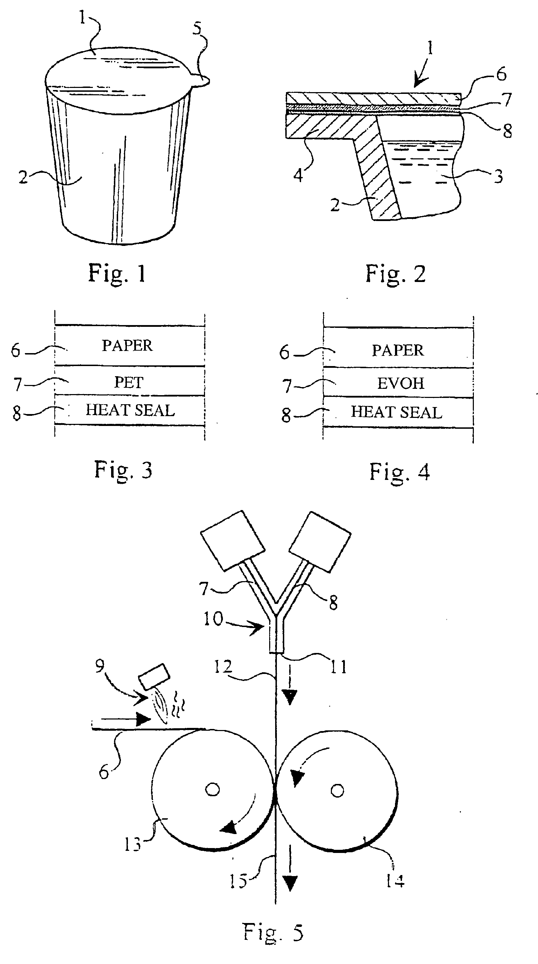

Figure 1 exemplifies a product package of the invention, which is formed of a drinking cup 2 equipped with a lid 1. The content 3 of such a package is typically water, juice, milk or a diary product, such as yoghurt. The lid 1 shown in figure 2 is tightly heat-sealed to the border flange 4 of the cup 2, comprising a flap 5, which can be pulled in order to remove the lid and open the package.

Figures 3 and 4 exemplify the three-layer structure 6-8 of the lid shown in figure 2. The lid comprises a paper layer 6, having a weight of e.g. 40-80 g/m² and forming the outer surface of the lid 1. In figure 3, the inner polymer coating of the lid consists of a PET layer 7, having a weight e.g. in the range from 20 to 40 g/m², and a heat-seal layer 8, which forms the inner surface of the lid 1 on the package and whose weight is e.g. in the range from 10 - 20 g/m². The heat-seal layer 8 of the example may contain, for instance, at least polyamide wax, about 20% of EMA, about 40% of EVA, the remainder being polyolefin. A suitable material of the heat-seal layer 8 is the product Mormelt 84 marketed by Rohm & Haas, having a density of 0.955 g/cm², a fusion point of 74 °C and a melt index of 45 to 55 g/10 min.

The layer combination of the lid 1 in figure 4 differs from that of figure 3 only in that the material of the oxygen-barrier layer 7 is EVOH instead of PET, having a layer weight of e.g. 10 to 20 g/m².

Besides for cups or goblets of plastic or coated cardboard, the lid materials shown in figures 3 and 4 are suitable also for box-like packages made of plastic or cardboard, especially as an inner peelable lid of the package or as similarly removable inner lids for glass container packages. Instead of paper 6, cardboard having e.g. a weight in the range from 220 to 300 g/m² is preferably used in the inner lids of boxes.

As shown in figure 5, the lid material is manufactured in a continuous process, in which the polymer oxygen-banier layer 7 and the polymer heat-seal layer 8 are coextruded on a continuous moving paper or cardboard web 6. The web 6 is subjected to a preliminary corona treatment 9. The polymer layers 7, 8 are joined in an extruder 10 and are guided from the nozzle end 11 as a uniform film 12 to a nip between the rollers 13, 14 rotating along with the paper or cardboard web 6, with the rollers pressing the layers together while maintaining the webs in movement. Thus, the process yields the lid material as a continuous web 15, from which the lids of individual packages are removed by cutting or punching.

### Example 1

A PET layer having a weight of 20 g/m² was applied to wrapping paper having a weight of 90 g/m², and uppermost a heat-sealing layer (Mormelt 804) having a weight of 15 g/m². A piece was cut from the polymer-coated paper thus obtained to form the lid of a food box made of polystyrene. The lid was fixed to the box opening by heat-sealing for 2 seconds at a sealing temperature of 175 °C. A tight seal was achieved between the polystyrene and the Mormelt heat-seal layer, and to open the box, the lid was removable in intact state from the box opening.

The test was repeated with the same result, using package boxes made of polyethylene and polypropylene.

### Example 2

A piece was cut from the polymer-coated wrapping paper obtained in example 1 and the piece was heat-sealed to form the lid at the opening of a glass container. The heat-sealing period was 2 seconds and the temperature 175 °C. During the sealing, the Mormelt layer of the lid adhered tightly to the glass surface of the container opening, and to open the container, the lid was removable intact from the container opening.

### Example 3

Packing board having a weight of 255 g/m² was coated with a PET layer having a weight of 40 g/m², and a nutrient fat box was made from this coated board by scoring, with the PET layer as inner surface of the box. The same packing board was also coated by applying by means of co-extrusion a PET layer having a weight of 20 g/m², with an uppermost heat-seal layer (Mormelt 804) having a weight of 15 g/m². A piece was cut from this double-layer coated board and heat-sealed to form the lid at the opening of the nutrient fat box, with a sealing period of 2 seconds and at a temperature of 175 °C. During the sealing, the Mormelt heat-sealing layer adhered tightly to the PET coating on the border flap of the box, and to open the box, the lid was removable intact from the opening of the box.

The test was repeated with the same result on a box made of uncoated packing board.

It is obvious to those skilled in the art that the applications of the invention are not confined to the examples above, but may vary within the scope of the accompanying claims.

## Claims

1. A lid (1) that can be heat-sealed to the opening of a package (2) and peeled off as the package is opened, comprising a fibrous material layer (6), a polymer oxygen-barrier layer (7) and a polymer heat-seal layer (8), **characterised in that** the heat-seal layer (8) comprises ethylene methyl acrylate copolymer (EMA), ethylene vinyl acetate copolymer (EVA) and polyamide wax, and **in that** the heat-seal layer is adhered directly to the oxygen-barrier layer (7) having a higher melting point without any intermediate binder.

2. A lid as defined in claim 1, **characterised in that** the polymer coating on the fibrous material (6) consists merely of said oxygen-barrier and heat-seal layers (7, 8).

3. A lid as defined in claim 1 or 2, **characterised in that** the polymer in the oxygen-barrier layer (7) is polyethylene terephthalate (PET), ethylene vinyl alcohol copolymer (EVOH) and/or polyamide (PA).

4. A lid as defined in claim 3, **characterised in that** the PET or PA oxygen-barrier layer has a weight in the range from 10 to 70 g/m², preferably from 20 to 40 g/m².

5. A lid as defined in claim 3, **characterised in that** the EVOH oxygen-barrier layer has a weight in the range from 5 to 25 g/m², preferably from 10 to 20 g/m².

6. A lid as defined in any of the preceding claims, **characterised in that** the heat-seal layer (8) has a weight in the range from 5 to 30 g/m², preferably from 10 to 20 g/m².

7. A lid as defined in any of the preceding claims, **characterised in that** the fibrous material layer (6) is made up of paper having a weight in the range from 30 to 120 g/m², preferably from 40 to 80 g/m².

8. A lid as defined in any of claims 1 to 6, **characterised in that** the fibrous material layer is made up of cardboard having a weight in the range from 130 to 600 g/m², preferably from 220 to 300 g/m².

9. A method for manufacturing a lid (1) fixable by heat sealing as defined in any of the preceding claims, **characterised in that** the fibrous material (6) is coated by co-extrusion in one single step with two polymer layers (7, 8) adhering to the fibres and to one another, one of said layers forming the oxygen-barrier layer (7) and the other forming the heat-seal layer (8) allowing the lid to be peeled off, the latter one containing a blend of ethylene methyl acrylate copolymer (EMA), ethylene vinyl acetate copolymer (EVA) and polyamide wax.

10. A method as defined in claim 9, **characterised in that** the polymer layers (7, 8) are extruded as continuous films on a moving fibrous material web (6) and **in that** discrete lids (1) are separated from the web (15) thus obtained by cutting or punching.

11. A method for manufacturing a sealed package, **characterised in that** a lid (1) is heat- sealed at the opening of the package (2), the lid comprising a fibrous material layer (6), a polymer oxygen-barrier layer (7) and a heat-seal layer (8) adhered directly to the oxygen-barrier layer without intermediate binder, the heat-seal layer containing a blend of ethylene methyl acrylate copolymer (EMA), ethylene vinyl acetate copolymer (EVA) and polyamide wax and allowing the lid to be peeled off as the package is opened.

12. A method as defined in claim 11, **characterised in that** the heat-sealing temperature is in the range from 150 to 190 °C.

13. A sealed package manufactured with the method of claim 11 or 12, **characterised in that** the package comprises a container, a packaged product (3) contained in the container (2), and a lid (1) heat-sealed at the opening of the container, the lid being made up of a fibrous material layer, a subjacent polymer oxygen-barrier layer (7), and a heat-seal layer (8) forming the inner surface of the lid and adhered directly to the oxygen-barrier layer without any intermediate binder, the heat-seal layer containing ethylene methyl acrylate copolymer (EMA), ethylene vinyl acetate copolymer (EVA) and polyamide wax, and allowing the lid to be peeled off as the package is opened.

14. A package as defined in claim 13, **characterised in that** the container is a cardboard box, cup or goblet coated with polymer on the inside and/or the outside.

15. A package as defined in claim 13, **characterised in that** the container is a plastic box, cup or goblet.

16. A package as defined in claim 13, **characterised in that** the container is made of glass.

17. A package as defined in any of claims 13 to 16, **characterised in** being a sealed food package.

## Patentansprüche

1. Deckel (1), der auf der Öffnung einer Verpackung (2) durch Heißsiegeln angebracht und abgezogen werden kann, wenn die Verpackung geöffnet wird, umfassend eine Fasermaterialschicht (6), eine polymere Sauerstoffbarriereschicht (7) und eine polymere Heißsiegelschicht (8), **dadurch gekennzeichnet, dass** die Heißsiegelschicht (8) Ethylenmethylacrylat-Copolymer (EMA), Ethylenvinylacetat-Copolymer (EVA) und Polyamid-Wachs umfasst, und **dadurch**, dass die Heißsiegelschicht direkt, ohne irgendeinen zwischengeschalteten Binder, an der Sauerstoffbarriereschicht (7), die einen höheren Schmelzpunkt besitzt, angeheftet wird.

2. Deckel, wie definiert in Anspruch 1, **dadurch gekennzeichnet, dass** die Polymerbeschichtung auf dem Fasermaterial (6) nur aus der Sauerstoffbarriereschicht und der Heißsiegelschicht (7,8) besteht.

3. Deckel, wie definiert in Anspruch 1 oder 2, **dadurch gekennzeichnet, dass** das Polymer in der Sauerstoffbarriereschicht (7) Polyethylenterephthalat (PET), Ethylenvinylalkohol-Copolymer (EVOH) und/oder Polyamid (PA) ist.

4. Deckel, wie definiert in Anspruch 3, **dadurch gekennzeichnet, dass** die PET- oder PA-Sauerstoffbarriereschicht ein Gewicht im Bereich von 10 bis 70 g/m², bevorzugt von 20 bis 40 g/m², besitzt.

5. Deckel, wie definiert in Anspruch 3, **dadurch gekennzeichnet, dass** die EVOH-Sauerstoffbarriereschicht ein Gewicht im Bereich von 5 bis 25 g/m², bevorzugt von 10 bis 20 g/m², besitzt.

6. Deckel, wie definiert in einem der vorigen Ansprüche, **dadurch gekennzeichnet, dass** die Heißsiegelschicht (8) ein Gewicht im Bereich von 5 bis 30 g/m², bevorzugt von 10 bis 20 g/m², besitzt.

7. Deckel, wie definiert in einem der vorigen Ansprüche, **dadurch gekennzeichnet, dass** die Fasermaterialschicht (6) aus einem Papier hergestellt ist, das ein Gewicht im Bereich von 30 bis 120 g/m², bevorzugt von 40 bis 80 g/m², besitzt.

8. Deckel, wie definiert in einem der Ansprüche 1 bis 6, **dadurch gekennzeichnet, dass** die Fasermaterialschicht aus einer Pappe hergestellt ist, die ein Gewicht im Bereich von 130 bis 600 g/m², bevorzugt von 220 bis 300 g/m², besitzt.

9. Verfahren zur Herstellung eines durch Heißsiegeln fixierbaren Deckels (1), wie in einem der vorigen Ansprüche definiert, **dadurch gekennzeichnet, dass** das Fasermaterial (6) durch Coextrusion in einem einzigen Schritt mit zwei Polymerschichten (7, 8) beschichtet wird, die an den Fasern und aneinander anhaften, wobei eine der Schichten die Sauerstoffbarriereschicht (7) ausbildet, und die andere die Heißsiegelschicht (8) ausbildet, die es dem Deckel ermöglicht, abgezogen zu werden, wobei letztere ein Gemisch aus Ethylenmethylacrylat-Copolymer (EMA), Ethylenvinylacetat-Copolymer (EVA) und Polyamid-Wachs enthält.

10. Verfahren, wie definiert in Anspruch 9, **dadurch gekennzeichnet, dass** die Polymerschichten (7,8) als kontinuierliche Filme auf einem sich bewegenden Fasermaterial-Geflecht (6) extrudiert werden und dass einzelne Deckel (1) aus dem so erhaltenen Geflecht (15) durch Schneiden oder Stanzen abgetrennt werden.

11. Verfahren zum Herstellen einer versiegelten Verpackung, **dadurch gekennzeichnet, dass** ein Deckel (1) auf die Öffnung der Verpackung (2) heißgesiegelt wird, wobei der Deckel eine Faser-materialschicht (6), eine polymere Sauerstoffbarriereschicht (7) und eine Heißsiegelschicht (8), die ohne zwischengeschalteten Binder direkt an der Sauerstoffbarriereschicht angeheftet ist, umfasst, wobei die Heißsiegelschicht ein Gemisch aus Ethylenmethylacrylat-Copolymer (EMA), Ethylenvinylacetat-Copolymer (EVA) und Polyamid-Wachs beinhaltet und es dem Deckel erlaubt, abgezogen zu werden, wenn die Verpackung geöffnet wird.

12. Verfahren, wie definiert in Anspruch 11, **dadurch gekennzeichnet, dass** die Heißsiegeltemperatur im Bereich von 150 bis 190°C liegt.

13. Versiegelte Verpackung, hergestellt mittels des Verfahrens nach Anspruch 11 oder 12, **dadurch gekennzeichnet, dass** die Verpackung einen Behälter, ein verpacktes Produkt (3), das in dem Behälter (2) enthalten ist, und einen Deckel (1), der an der Öffnung des Behälters durch Heißsiegeln angebracht ist, umfasst, wobei der Deckel aufgebaut ist aus einer Fasermaterialschicht, einer darunter liegenden polymeren Sauerstoffbarriereschicht (7) und einer Heilisiegelschicht (8), die die Innenoberfläche des Deckels ausbildet und direkt, ohne zwischengeschalteten Binder, an der Sauerstoffbarriereschicht angeheftet ist, wobei die Heißsiegelschicht Ethylenmethylacrylat-Copolymer (EMA), Ethylenvinylacetat-Copolymer (EVA) und Polyamid-Wachs beinhaltet und es dem Deckel erlaubt, abgezogen zu werden, wenn die Verpackung geöffnet wird.

14. Verpackung, wie definiert in Anspruch 13, **dadurch gekennzeichnet, dass** der Behälter eine Papp-Box, ein -Becher, bzw. eine -Tasse oder ein -Kelch ist, der/die an der Innenseite und/oder der Außenseite mit Polymer beschichtet ist.

15. Verpackung, wie definiert in Anspruch 13, **dadurch gekennzeichnet, dass** der Behälter eine Plastik-Box, ein -Becher bzw. eine -Tasse oder ein -Kelch ist.

16. Verpackung, wie definiert in Anspruch 13, **dadurch gekennzeichnet, dass** der Behälter aus Glas herstellt ist.

17. Verpackung, wie definiert in einem der Ansprüche 13 bis 16, **dadurch gekennzeichnet, dass** diese eine versiegelte Lebensmittel-Verpackung ist.

## Revendications

1. Couvercle (1) pouvant être thermoscellé sur l'ouverture d'un emballage (2) et détaché par pelage lorsque l'emballage est ouvert, comprenant une couche d'une matière fibreuse (6), une couche polymérique faisant barrière à l'oxygène (7) et une couche polymérique de thermo-scellage (8), **caractérisé en ce que** la couche de thermo-scellage (8) comprend un copolymère d'éthylène et d'acrylate de méthyle (EMA), un copolymère d'éthylène et d'acétate de vinyle (EVA) et une cire polyamide, et **en ce que** la couche de thermo-scellage est collée directement à la couche faisant barrière à l'oxygène (7) présentant un point de fusion supérieur, sans liant intermédiaire.

2. Couvercle selon la revendication 1, **caractérisé en ce que** l'enduit polymérique sur la matière fibreuse (6) consiste seulement en lesdites couches faisant barrière à l'oxygène et de thermo-scellage (7, 8).

3. Couvercle selon la revendication 1 ou 2, **caractérisé en ce que** le polymère dans la couche faisant barrière à l'oxygène (7) est un polyéthylène téréphtalate (PET), un copolymère d'éthylène et d'alcool vinylique (EVOH) et/ou un polyamide (PA).

4. Couvercle selon la revendication 3, **caractérisé en ce que** la couche barrière à l'oxygène PET ou PA a un poids compris dans la plage de 10 à 70 g/m², de préférence de 20 à 40 g/m².

5. Couvercle selon la revendication 3, **caractérisé en ce que** la couche barrière à l'oxygène EVOH a un poids compris dans la plage de 5 à 25 g/m², de préférence de 10 à 20 g/m².

6. Couvercle selon l'une quelconque des revendications précédentes, **caractérisé en ce que** la couche de thermo-scellage (8) a un poids compris dans la plage de 5 à 30 g/m², de préférence de 10 à 20 g/m².

7. Couvercle selon l'une quelconque des revendications précédentes, **caractérisé en ce que** la couche de matière fibreuse (6) est faite de papier présentant un poids compris dans la plage de 30 à 120 g/m², de préférence de 40 à 80 g/m².

8. Couvercle selon l'une quelconque des revendications 1 à 6, **caractérisé en ce que** la couche de matière fibreuse est faite de carton présentant un poids compris dans la plage de 130 à 600 g/m², de préférence de 220 à 300 g/m².

9. Procédé de production d'un couvercle (1) se fixant par thermo-scellage tel que défini dans l'une quelconque des revendications précédentes, **caractérisé en ce que** la matière fibreuse (6) est enduite par co-extrusion en une seule étape avec deux couches polymériques (7, 8) adhérant aux fibres et l'une à l'autre, une desdites couches formant la couche barrière à l'oxygène (7) et l'autre formant la couche de thermo-scellage (8) permettant au couvercle d'être détaché par pelage, cette dernière contenant un mélange de copolymère d'éthylène et d'acrylate de méthyle (EMA), de copolymère d'éthylène et d'acétate de vinyle (EVA) et de cire polyamide.

10. Procédé- selon la revendication 9, **caractérisé en ce que** les couches polymériques (7, 8) sont extrudées en films continus sur une toile de matière fibreuse mobile (6) et **en ce que** des couvercles distincts (1) sont séparés de la toile (15) ainsi obtenue par taillage ou découpage.

11. Procédé de fabrication d'un emballage fermé hermétiquement, **caractérisé en ce qu'**un couvercle (1) est thermoscellé sur l'ouverture de l'emballage (2), le couvercle comprenant une couche de matière fibreuse (6), une couche polymérique faisant barrière à l'oxygène (7) et une couche de thermo-scellage (8) collée directement à la couche barrière à l'oxygène sans liant intermédiaire, la couche de thermo-scellage comprenant un mélange de copolymère d'éthylène et d'acrylate de méthyle (EMA), de copolymère d'éthylène et d'acétate de vinyle (EVA) et de cire polyamide et permettant au couvercle d'être détaché par pelage lorsque l'emballage est ouvert.

12. Procédé selon la revendication 11, **caractérisé en ce que** la température de thermo-scellage est comprise dans la plage de 150 à 190°C.

13. Emballage fermé hermétiquement produit selon la méthode de la revendication 11 ou 12, **caractérisé en ce que** l'emballage comprend un conteneur, un produit emballé (3) contenu dans ledit conteneur (2), et un couvercle (1) thermoscellé sur l'ouverture du conteneur, le couvercle étant fait d'une couche de matière fibreuse, d'une couche polymérique faisant barrière à l'oxygène sous-jacente (7), et d'une couche de thermo-scellage (8) formant la surface interne du couvercle et collée directement à la couche faisant barrière à l'oxygène sans liant intermédiaire, la couche de thermo-scellage contenant un copolymère d'éthylène et d'acrylate de méthyle (EMA), un copolymère d'éthylène et d'acétate de vinyle (EVA) et une cire polyamide, et permettant au couvercle d'être détaché par pelage lorsque l'emballage est ouvert.

14. Emballage selon la revendication 13, **caractérisé en ce que** le conteneur est une boîte, une coupe ou un gobelet en carton recouvert par un polymère à l'intérieur et/ou à l'extérieur.

15. Emballage selon la revendication 13, **caractérisé en ce que** le conteneur est une boîte, une coupe ou un gobelet en plastique.

16. Emballage selon la revendication 13, **caractérisé en ce que** le conteneur est fait de verre.

17. Emballage selon l'une quelconque des revendications 13 à 16, **caractérisé en ce qu'**il consiste en un emballage pour aliment fermé hermétiquement.
